# EUROPEAN PATENT SPECIFICATION

(11) **EP 3 853 981 B1**
(45) Date of publication and mention of the grant of the patent: **21.06.2023**
(21) Application number: 18772788.8
(22) Date of filing: 17.09.2018
(51) Int. Cl.: H02K 11/40, H02K 5/22, H02K 1/14, H02K 11/33

(54) **MOTOR VEHICLE AUXILIARY UNIT**
HILFSEINHEIT FÜR EIN KRAFTFAHRZEUG
UNITÉ AUXILIAIRE DE VÉHICULE AUTOMOBILE

(43) Date of publication of application: 28.07.2021
(73) Proprietor: Pierburg Pump Technology GmbH, 41460 Neuss (DE)
(72) Inventor: PAVKOVIC, Nenad, 40591 Düsseldorf (DE); KERSTEN, Timo, 40625 Düsseldorf (DE); SCHULZ, Christian, 47239 Duisburg (DE)
(74) Representative: terpatent Patentanwälte ter Smitten Eberlein-Van Hoof Rütten Daubert
(86) International application number: PCT/EP2018/075015
(87) International publication number: WO 2020/057714

(56) References cited:
- EP-A1- 0 026 833
- EP-A1- 2 500 576
- EP-A2- 3 340 444
- WO-A1-2013/187585
- DE-A1-102012 006 020
- US-A- 5 977 669
- US-A1- 2006 175 917

## Description

The invention is directed to a motor vehicle auxiliary unit, for example to an electric gas pump for pumping fuel vapor out of a motor vehicle fuel tank.

Such a motor vehicle auxiliary unit comprises an electronically commutated electric motor with a permanent magnetic motor rotor, with a motor stator with a ferromagnetic stator body and at least one stator coil, as well as with a motor electronics with a ground terminal for electrically connecting the motor electronics with an external vehicle ground potential. The motor vehicle auxiliary unit also comprises a unit connector plug for externally energizing and, optionally, for controlling the motor vehicle auxiliary unit. The unit connector plug comprises at least an external-ground connector lug for electrically connecting the motor vehicle auxiliary unit with an external vehicle ground potential. The external-ground connector lug is internally directly connected with the motor electronics ground terminal for electrically connecting the motor electronics ground terminal with the external vehicle ground potential.

Like all other electronic devices, the electronically commutated electric motor of the motor vehicle auxiliary unit generates electromagnetic interference radiation, which can cause malfunctions or even failure of other electronic devices in the vicinity of the electric motor. The interference radiation can, for example, interfere with the motor electronics of the electric motor. Against this background, electronic devices have to fulfill application-specific electromagnetic compatibility (EMC) directives. As a result, the electric motor is provided with a stator body contact element providing a direct electric connection between the motor electronics ground terminal and the stator body to minimize the electromagnetic interference radiation being generated by the electric motor.

An electric motor with a stator body contact element electrically connecting the stator body with the motor electronics is, for example, disclosed in EP 3 007 330 B1. The stator body contact element is fixed to the stator body with one axial end and is plugged into a motor electronics ground terminal with the opposite axial end. As a result, the stator body contact element has to be exactly positioned and aligned during the assembling process to fit into the corresponding motor electronics terminal.

EP 3 340 444 A2 discloses a radiator fan module with an electric motor and with a connector cable. The radiator fan module comprises a punched-grid connection element for connecting wires of the connector cable with a printed circuit board. The punched-grid connection element comprises a stator body contact element which provides an electric connection between an external-ground wire of the connector cable and a stator body of the electric motor.

EP 2 500 576 A1 discloses a heating system circulator pump with an electric motor and with a connector plug. The connector plug comprises an external-ground connector lug which is directly electrically connected with a ground terminal of a circuit board. The external-ground connector lug comprises a housing contact element which provides a direct electric connection with a housing of the electric motor.

It is an object of the invention to provide a motor vehicle auxiliary unit, which provides good EMC characteristics and which is assemblable in a simple way.

This object is achieved with a motor vehicle auxiliary unit with the features of claim 1.

The motor vehicle auxiliary unit according to the invention is provided with an electronically commutated motor with a permanent magnetic motor rotor and with a motor stator comprising a ferromagnetic stator body and at least one stator coil. The motor rotor is, for example, co-rotatably connected with a pump wheel and is typically provided with a ferromagnetic rotor body with embedded permanent magnets. Alternatively, the motor rotor can be provided with a monolithic permanent-magnetic rotor body.

The electric motor of the motor vehicle auxiliary unit according to the invention is also provided with a motor electronics being electrically connected with the stator coil for energizing the stator coil and thereby driving the motor rotor. The motor electronics comprises several power semiconductors for commutating the electric drive energy being provided to the stator coil. The motor electronics also comprises a ground terminal for electrically connecting the motor electronics with an external vehicle ground potential to provide the motor electronics with electric energy.

The motor vehicle auxiliary unit according to the invention is also provided with a unit connector plug for externally energizing and controlling the motor vehicle auxiliary unit. The unit connector plug comprises at least an external-ground connector lug for electrically connecting the motor vehicle auxiliary unit with an external vehicle ground potential. The external-ground connector lug is made of a metal and provides a direct low-resistive electric connection with the motor electronics ground terminal. All connector lugs of the unit connector plug are typically simultaneously stamped out of a metal sheet and are post-processed by a mechanical deformation process.

According to the invention, the external-ground connector lug is provided with an integral stator body contact element providing a direct electric connection with the stator body. This means that the external-ground connector lug is provided as a single-piece three-way electric connector providing a direct electric interconnection between an external contact pin being electrically connectable with the vehicle ground potential, the motor electronics and the stator body. The stator body contact element extends from the external contact pin to the stator body and is reliably fixed to the stator body, for example by overmolding. The electric connection with the motor electronics is provided by an integral motor electronics contact element which extends from the external contact pin to the motor electronics and typically is plugged into a correspondingly shaped ground terminal of the motor electronics.

Since the stator body contact element is integrated into the unit connector plug, no additional contact element is required, which has to be separately mounted and aligned. As a result, the motor vehicle auxiliary unit according to the invention can be assembled in a simple way. The integral contact element also reduces the number of junctions in the electric connection between the stator body and the vehicle ground potential and, as a result, reduces the total electric resistance of this electric connection. The direct electric connection between the stator body, the motor electronics ground terminal and the external-ground potential ensures good EMC characteristics of the motor vehicle auxiliary unit according to the invention.

In a preferred embodiment of the invention, a transversal stator body top side is provided with an axial contact opening, wherein the stator body contact element is plugged into the contact opening. This allows an accurate alignment of the external-ground connector lug with respect to the stator body and provides a reliable electric connection between the stator body contact element and the stator body.

Typically, the stator body is provided with an electrically isolating protection coating. As a result, the stator body contact element is preferably provided with at least one cutting element penetrating the isolating stator body coating to provide an electric contact with the stator body. The cutting element also fixes the external-ground connector lug to the stator body.

In a preferred embodiment of the invention, the contact opening is substantially circular and the stator body contact element comprises a corresponding contact ring. More preferably, the inside diameter of the contact ring is substantially equal to the opening diameter of the contact opening. This allows a simple alignment of the stator body contact element with respect to the stator body, for example by an alignment pin. The alignment pin extends through the contact ring into the contact opening and thereby positions the stator body contact element and, as a result, the external-ground connector lug with respect to the stator body.

Alternatively, the contact ring is provided with an axially extending plug cylinder and with a support flange laterally projecting from the plug cylinder. The plug cylinder is plugged into the contact opening and radially contacts the inside surface of the contact opening. The support flange is in axial contact with the stator body top side to define the intrusion depth of the plug cylinder into the contact opening. This provides a simple and reliable positioning of the external-ground connector lug with respect to the stator body.

Preferably, the outside diameter of the plug cylinder is slightly larger than the opening diameter of the contact opening. In the present description, the term "opening diameter" always means the diameter of the unstressed contact opening, i.e. the diameter of the contact opening before the stator body contact element is plugged into the contact opening. Since the plug cylinder outside diameter is slightly larger than the opening diameter of the contact opening, the plug cylinder abrades the isolation from the inside surface of the contact opening when being pressed into the contact opening. As a result, the plug cylinder provides a reliable electric contact with the stator body as well as a robust fixation of the external-ground connector lug to the stator body.

In a preferred embodiment of the invention, the contact ring is provided with several cutting elements which are distributed along the outside circumference of the contact ring and which axially protrude over the contact ring bottom side. As a result, the cutting elements penetrate the stator body isolation coating if the contact ring is pressed against the stator body top side. The penetrating cutting elements provide a reliable electric connection and avoid a lateral shifting of the stator body contact element with respect to the stator body.

Preferably, a separate fastening means is provided which extends through the contact ring into the contact opening and axially presses the contact ring against the stator body top side. Typically, the fastening means is provided with an axially extending pin and a laterally extending head. The pin axially extends through the contact ring into the contact opening to fix the fastening means within or at the stator body in that way that the head axially presses the contact ring against the stator body. The fastening means can, for example, be a rivet or a screw. The fastening means provides a robust fixation of the external-ground connector lug. The axial pressure generated by the fastening means also provides a reliable electric contact with the stator body, in particular if the stator body contact element is provided with cutting elements.

In a preferred embodiment of the invention, the unit connector plug also comprises a power connector lug being electrically connected with the motor electronics for energizing the motor electronics so that no additional connector plug is required for energizing the motor electronics.

Preferably, the motor vehicle auxiliary unit is provided with a sensor element and the unit connector plug comprises at least one sensor connector lug being electrically connected with the sensor element. The sensor element can, for example, be a pressure sensor or a speed sensor being externally readable/programmable via the sensor connector lug of the unit connector plug. As a result, no additional sensor connector plug is required.

Different embodiments of the invention are described with reference to the enclosed drawings, wherein
figure 1 shows a schematic illustration of a motor vehicle auxiliary unit according to invention,
figure 2 shows a side view of an electric motor and an external-ground connector lug of the motor vehicle auxiliary unit of figure 1,
figure 3 shows a sectional side view of a stator body and a stator body connection element of the motor vehicle auxiliary unit of figure 1 and 2,
figure 4 shows a sectional side view of an alternative stator body connection element according to the invention,
figure 5 shows top view of another alternative stator body connection element according to the invention, and
figure 6 shows a partially sectioned side view of the stator body connection element of figure 5, wherein the stator body connection element is fixed to the stator body by a fastening means.

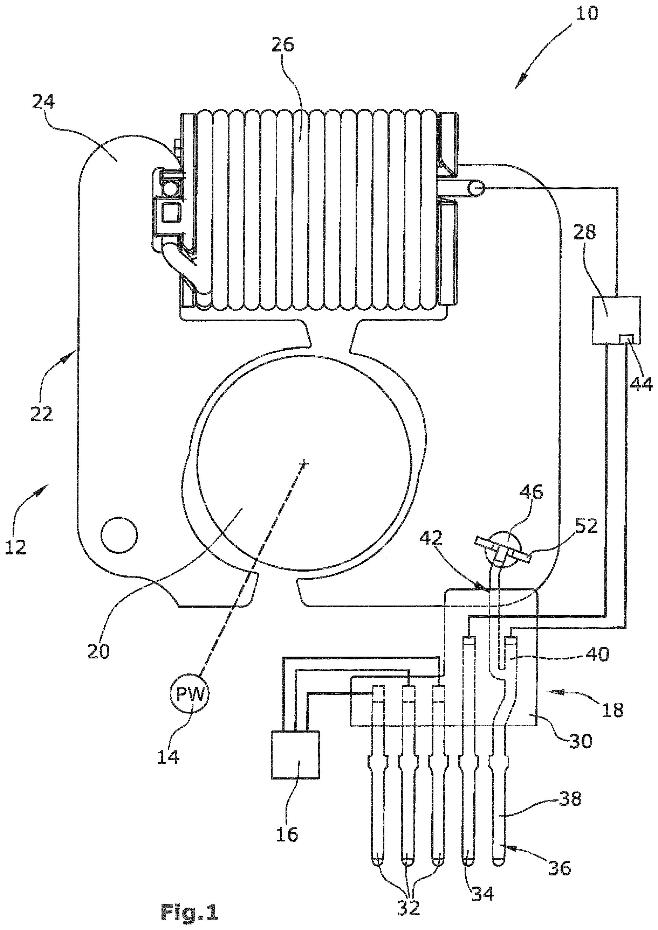

Figure 1 shows a motor vehicle auxiliary unit 10, which in the present embodiment is a gas pump for pumping fuel vapor out of a motor vehicle fuel tank (not shown). The auxiliary unit 10 comprises an electronically commutated electric motor 12, a pump wheel 14, a sensor element 16 and a unit connector plug 18.

The electric motor 12 comprises a rotatable permanent magnetic motor rotor 20 and a static motor stator 22 with a ferromagnetic stator body 24 and a single stator coil 26. The motor rotor 20 is co-rotatably connected with the pump wheel 14. In the present embodiment of the invention, the stator body 24 is a laminated stator body which is coated with an electrically isolating protection coating 27. The stator body 24 is provided with an axial contact opening 46 which in the present embodiment of the invention is provided with a circular cross section and which extends from a stator body top side 48 along the entire axial height of the stator body 24 to a stator body bottom side 50. The electric motor 12 also comprises a motor electronics 28 being electrically connected to the stator coil 26 for energizing the stator coil 26 for driving the motor rotor 20 and, as a result, for driving the pump wheel 14.

The unit connector plug 18 comprises a plug housing 30 and is provided with three sensor connector lugs 32, a power connector lug 34 and an external-ground connector lug 36, which are externally electrically contactable. All connector lugs 32,34,36 are stamped out of a single metal sheet and post-processed by a mechanical deformation process. The sensor connector lugs 32 are internally electrically connected with the sensor element 16 for energizing the sensor element 16 and/or for providing a data interface for reading/writing data from/to the sensor element 16. The power connector lug 34 is internally electrically connected with the motor electronics 28 and externally connectable to an external energy source, for example to a motor vehicle battery, for providing the motor electronics 28 with electric energy.

The external-ground connector lug 36 is provided as a single-piece three-way electric connector comprising an external-ground pin 38, a motor electronics contact element 40 and a stator body contact element 42. The external-ground pin 38 is externally connectable to an external motor vehicle ground potential. The motor electronics contact element 40 provides a direct electric connection with the motor electronics 28, in particular with a ground terminal 44 of the motor electronics 28. The stator body contact element 42 provides a direct electric contact with the stator body 24.

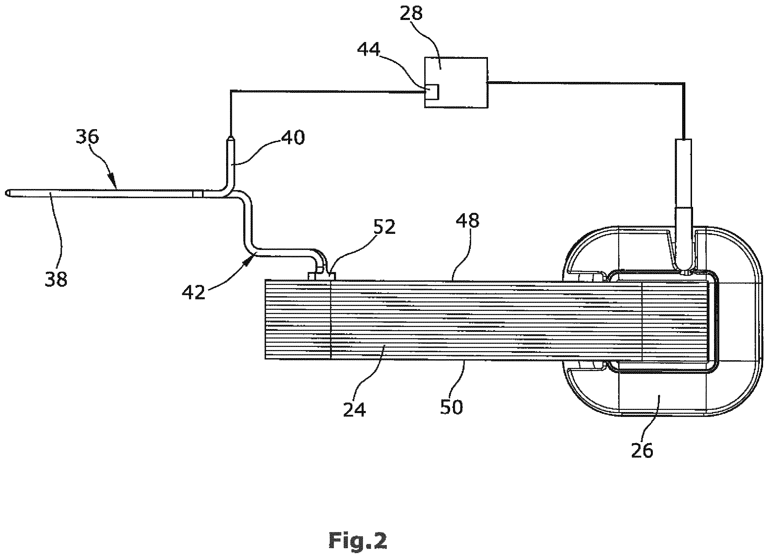

In the embodiment of the invention shown in figures 1 to 3, the stator body contact element 42 is provided with a substantially laterally extending support bar 52 and with an arrowhead-shaped cutting element 54. The stator body contact element 42 is plugged into the contact opening 46 in that way that the support bar 52 is in axial contact with the stator body top side 48 and that the cutting element 54 intrudes into the contact opening 46. The lateral width of the cutting element 54 is slightly larger than the opening diameter of the contact opening 46 so that the cutting element 54 cuts into the sidewalls of the contact opening 46. In particular, the cutting element 54 cuts through the isolation coating 27 of the stator body 24 so that the cutting element 54 provides a reliable electric contact with the stator body 24. The cutting element 54 also reliably positions the stator body contact element 42 with respect to the stator body 24 during the assembling process.

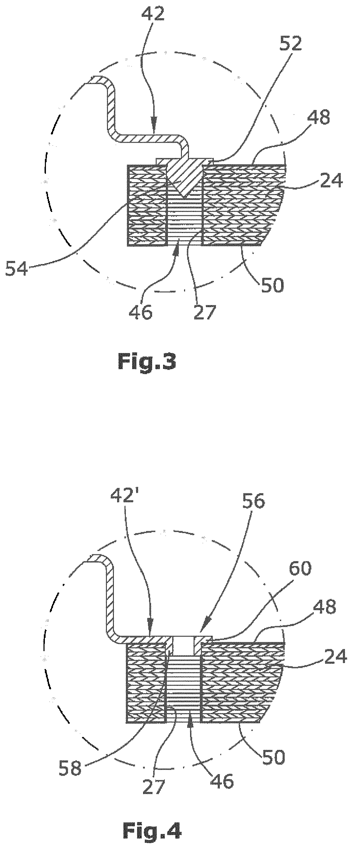

Figure 4 shows an alternative stator body contact element 42' being provided with a contact ring 56. The contact ring 56 comprises a substantially axially extending plug cylinder 58 and a support flange 60 laterally projecting from the plug cylinder 58. The stator body contact element 42' is plugged into the contact opening 46 in that way that the support flange 60 is in axial contact with the stator body top side 48 and that the plug cylinder 58 intrudes into the contact opening 46 and radially contacts the inside surface of the contact opening 46. The plug cylinder 58 is provided with an outside diameter being slightly larger than the opening diameter of the contact opening 46 so that the plug cylinder 58 abrades the isolation coating 27 from the sidewalls of the contact opening 46 when being inserted into the contact opening 46. As a result, the plug cylinder 58 provides a reliable electric contact with the stator body 24 and reliably positions the stator body contact element 42' during the assembling process.

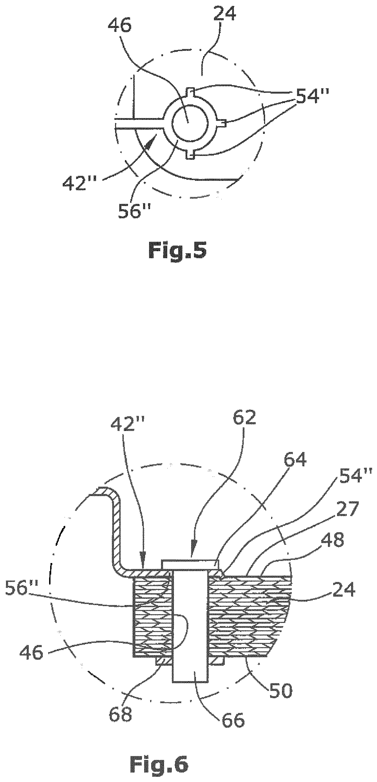

Figures 5 and 6 show another alternative stator body contact element 42". The stator body contact element 42" is provided with a transversal contact ring 56", wherein the inside diameter of the contact ring 56" is substantially equal to the opening diameter of the contact opening 46. The contact ring 56" is provided with three cutting elements 54" distributed along the outside circumference of the contact ring 56". The cutting elements 54" laterally protrude from outside of the contact ring 56" and extend in axial direction in that way that the cutting elements 54" axially project over the bottom side of the contact ring 56". The stator body contact element 42" is fastened to the stator body 24 by a separate fastening means 62 which in the present embodiment of the invention is a screw with a transversal screw head 64 and an axially extending screw pin 66. The screw head 64 is in axial contact with the top side of the contact ring 56". The screw pin 66 axially extends from the screw head 64 through the contact hole 46 and is threaded into a corresponding nut 68 being located at the bottom side of the stator body 24. By tightening the fastening means 62, the contact ring 56" is axially pressed against the stator body 24 by the screw head 64 so that the cutting elements 54" are pressed into the stator body 24. As a result, the cutting elements 54" penetrate the protection coating 27 of the stator body 24 and provide a reliable electric contact with the stator body 24.

### Reference list

- 10: motor vehicle auxiliary unit
- 12: electronically commutated electric motor
- 14: pump wheel
- 16: sensor element
- 18: unit connector plug
- 20: motor rotor
- 22: motor stator
- 24: stator body
- 26: stator coil
- 27: protection coating
- 28: motor electronics
- 30: plug housing
- 32: sensor connector lugs
- 34: power connector lug
- 36: external-ground connector lug
- 38: external-ground pin
- 40: motor electronics contact element
- 42: stator body contact element
- 44: ground terminal
- 46: contact opening
- 48: stator body top side
- 50: stator body bottom side
- 52: support bar
- 54: cutting element
- 56: contact ring
- 58: plug cylinder
- 60: support flange
- 62: fastening means
- 64: screw head
- 66: screw pin
- 68: nut

## Claims

1. Motor vehicle auxiliary unit (10) comprising
- an electronically commutated electric motor (12) with
• a permanent magnetic motor rotor (20)
• a motor stator (22) with a ferromagnetic stator body (24) and at least one stator coil (26), and
• a motor electronics (28) with a ground terminal (44), and
- a unit connector plug (18) with at least an external-ground connector lug (36) being directly electrically connected with the motor electronics ground terminal (44),
- wherein the external-ground connector lug (36) is provided with an integral stator body contact element (42;42':42") that extends to the stator body (24) providing a direct electric connection with the stator body (24).

2. Motor vehicle auxiliary unit (10) according to claim 1, wherein a transversal stator body top side (48) is provided with an axial contact opening (46), and
wherein the stator body contact element (42;42') is plugged into the contact opening (46).

3. Motor vehicle auxiliary unit (10) according to any preceding claim, wherein the stator body (24) is provided with an electrically isolating coating (27), and
wherein the stator body contact element (42;42") is provided with at least one cutting element (54;54") penetrating the stator body coating (27).

4. Motor vehicle auxiliary unit (10) according to claim 2, wherein the contact opening (46) is substantially circular, and
wherein the stator body contact element (42';42") comprises a contact ring (56;56").

5. Motor vehicle auxiliary unit (10) according to claim 4, wherein the inside diameter of the contact ring (56") is substantially equal to the opening diameter of the contact opening (46).

6. Motor vehicle auxiliary unit (10) according to claim 4, wherein the contact ring (56) is provided with an axially extending plug cylinder (58) and with a support flange (60) laterally projecting from the plug cylinder (58),
wherein the plug cylinder (58) is plugged into the contact opening (46) and radially contacts the inside surface of the contact opening (46), and
wherein the support flange (60) is in axial contact with the stator body top side (48).

7. Motor vehicle auxiliary unit (10) according to claim 6, wherein the outside diameter of the plug cylinder (58) is slightly larger than the opening diameter of the contact opening (46).

8. Motor vehicle auxiliary unit (10) according to any of the claims 4 to 7, wherein the contact ring (56") is provided with several cutting elements (54") distributed along the outside circumference of the contact ring (56").

9. Motor vehicle auxiliary unit (10) according to any of the claims 4 to 8, wherein a separate fastening means (62) is provided which extends through the contact ring (56") into the contact opening (46) and axially presses the contact ring (56") against the stator body top side (48).

10. Motor vehicle auxiliary unit (10) according to any preceding claim, wherein the unit connector plug (18) comprises at least one power connector lug (34) being electrically connected with the motor electronics (28) for energizing the motor electronics (28).

11. Motor vehicle auxiliary unit (10) according to any preceding claim, wherein a sensor element (16) is provided, and
wherein the unit connector plug (18) comprises at least one sensor connector lug (32) being electrically connected with the sensor element (16).

## Patentansprüche

1. Kraftfahrzeughilfsaggregat (10), umfassend
- einen elektronisch kommutierten Elektromotor (12) mit
• einem permanentmagnetischen Motorrotor (20)
• einem Motorstator (22) mit einem ferromagnetischen Statorkörper (24) und mindestens einer Statorspule (26), und
• einer Motorelektronik (28) mit einem Masseanschluss (44), und
- einen Aggregatanschlussstecker (18) mit zumindest einer Außenmasseanschlussfahne (36), die mit dem Motorelektronikmasseanschluss (44) direkt elektrisch verbunden ist,
- wobei die Außenmasseanschlussfahne (36) ein integriertes Statorkörperkontaktelement (42; 42'; 42") aufweist, das sich zu dem Statorkörper (24) erstreckt und eine direkte elektrische Verbindung mit dem Statorkörper (24) herstellt.

2. Kraftfahrzeughilfsaggregat (10) nach Anspruch 1, wobei eine quer verlaufende Statorkörperoberseite (48) eine axiale Kontaktöffnung (46) aufweist, und
wobei das Statorkörperkontaktelement (42; 42') in die Kontaktöffnung (46) gesteckt ist.

3. Kraftfahrzeughilfsaggregat (10) nach einem der vorhergehenden Ansprüche, wobei der Statorkörper (24) eine elektrisch isolierende Beschichtung (27) aufweist, und
wobei das Statorkörperkontaktelement (42; 42") mindestens ein Schneidelement (54; 54") aufweist, das die Statorkörperbeschichtung (27) durchdringt.

4. Kraftfahrzeughilfsaggregat (10) nach Anspruch 2, wobei die Kontaktöffnung (46) im Wesentlichen kreisförmig ist, und
wobei das Statorkörperkontaktelement (42'; 42") einen Kontaktring (56; 56") umfasst.

5. Kraftfahrzeughilfsaggregat (10) nach Anspruch 4, wobei der Innendurchmesser des Kontaktrings (56") im Wesentlichen gleich dem Öffnungsdurchmesser der Kontaktöffnung (46) ist.

6. Kraftfahrzeughilfsaggregat (10) nach Anspruch 4, wobei der Kontaktring (56) einen sich axial erstreckenden Steckzylinder (58) und einen von dem Steckzylinder (58) seitlich vorstehenden Stützflansch (60) aufweist,
wobei der Steckzylinder (58) in die Kontaktöffnung (46) gesteckt ist und radial an der Innenfläche der Kontaktöffnung (46) anliegt, und wobei der Stützflansch (60) axial an der Statorkörperoberseite (48) anliegt.

7. Kraftfahrzeughilfsaggregat (10) nach Anspruch 6, wobei der Außendurchmesser des Steckzylinders (58) geringfügig größer als der Öffnungsdurchmesser der Kontaktöffnung (46) ist.

8. Kraftfahrzeughilfsaggregat (10) nach einem der Ansprüche 4 bis 7, wobei der Kontaktring (56") mehrere Schneidelemente (54") aufweist, die entlang des Außenumfangs des Kontaktrings (56") verteilt angeordnet sind.

9. Kraftfahrzeughilfsaggregat (10) nach einem der Ansprüche 4 bis 8, wobei ein separates Befestigungsmittel (62) vorhanden ist, das sich durch den Kontaktring (56") hindurch in die Kontaktöffnung (46) hinein erstreckt und den Kontaktring (56") axial gegen die Statorkörperoberseite (48) drückt.

10. Kraftfahrzeughilfsaggregat (10) nach einem der vorhergehenden Ansprüche, wobei der Aggregatstecker (18) mindestens eine Leistungsanschlussfahne (34) umfasst, die mit der Motorelektronik (28) elektrisch verbunden ist, um die Motorelektronik (28) mit Energie zu versorgen.

11. Kraftfahrzeughilfsaggregat (10) nach einem der vorhergehenden Ansprüche, wobei ein Sensorelement (16) vorhanden ist, und
wobei der Geräteanschlussstecker (18) mindestens eine Sensoranschlussfahne (32) umfasst, die mit dem Sensorelement (16) elektrisch verbunden ist.

## Revendications

1. Unité auxiliaire pour véhicule à moteur (10) qui comprend
- un moteur électrique à commutation électronique (12) avec
- un rotor de moteur à aimant permanent (20)
- un stator de moteur (22) avec un corps de stator ferromagnétique (24) et au moins une bobine de stator (26), et
- une électronique de moteur (28) avec une borne de mise à la terre (44), et
- une fiche de connexion d'unité (18) avec au moins une languette de connexion de mise à la masse externe (36) directement connectée électriquement à la borne de mise à la masse de l'électronique du moteur (44),
- dans laquelle la languette du connecteur de masse externe (36) est pourvue d'un élément de contact (42;42';42") intégré au corps du stator (24) qui s'étend jusqu'au corps du stator (24) et qui comprend une connexion électrique directe avec le corps du stator (24).

2. Unité auxiliaire de véhicule à moteur (10) selon la revendication 1, dans laquelle un côté supérieur transversal du corps de stator (48) est fourni avec une ouverture de contact axiale (46), et
dans lequel l'élément de contact du corps de stator (42;42') est enfiché dans l'ouverture de contact (46).

3. Unité auxiliaire de véhicule à moteur (10) selon toute revendication précédente, dans laquelle le corps de stator (24) est fourni avec un revêtement d'isolation électrique (27), et. dans laquelle l'élément de contact du corps de stator (42;42") est fourni avec au moins un élément de coupe (54;54") pénétrant dans le revêtement du corps de stator (27).

4. Unité auxiliaire de véhicule à moteur (10) selon la revendication 2, dans laquelle l'ouverture de contact (46) est substantiellement circulaire, et dans lequel l'élément de contact du corps de stator (42';42") comprend une bague de contact (56;56").

5. Unité auxiliaire de vehicule à moteur (10) selon la revendication 4, dans laquelle le diamètre intérieur de la bague de contact (56") est substantiellement égal au diamètre d'ouverture de l'ouverture de contact (46).

6. Unité auxiliaire de véhicule à moteur (10) selon la revendication 4, dans laquelle la bague de contact (56) est fournie avec un cylindre d'obturation (58) s'étendant axialement et avec une flasque de support (60) faisant saillie latéralement à partir du cylindre d'obturation (58),
dans lequel le cylindre d'obturation (58) est enfoncé dans l'ouverture de contact (46) et est en contact radial avec la surface intérieure de l'ouverture de contact (46), et
dans lequel la flasque de support (60) est en contact axial avec la face supérieure du corps du stator (48).

7. Unité auxiliaire de véhicule à moteur (10) selon la revendication 6, dans laquelle le diamètre extérieur du cylindre d'obturation (58) est légèrement supérieur au diamètre d'ouverture de l'ouverture de contact (46).

8. Unité auxiliaire de véhicule à moteur (10) selon l'une quelconque des revendications 4 à 7, dans laquelle la bague de contact (56") est fournie avec plusieurs éléments de coupe (54") répartis le long de la circonférence extérieure de la bague de contact (56").

9. Unité auxiliaire pour véhicule moteur (10) selon l'une quelconque des revendications 4 à 8, dans laquelle un moyen de fixation séparé (62) est fourni qui s'étend à travers la bague de contact (56") dans l'ouverture de contact (46) et presse axialement la bague de contact (56") contre la face supérieure du corps du stator (48).

10. Unité auxiliaire de véhicule à moteur (10) selon toute revendication précédente, dans lequel la fiche de connexion de l'unité (18) comprend au moins une languette de connexion en énergie (34) qui est connectée électriquement avec l'électronique du moteur (28) pour énergiser l'électronique du moteur (28).

11. Unité auxiliaire de véhicule à moteur (10) selon toute revendications précédentes, dans lequel un senseur (16) est fourni, et
dans lequel la fiche de connexion de l'unité (18) comprend au moins une senseur capteur languette (32) qui est connectée électriquement à l'élément capteur (16).
